# EUROPEAN PATENT APPLICATION

(11) **EP 1 860 871 A1**
(43) Date of publication of application: **28.11.2007**
(21) Application number: 07010511.9
(22) Date of filing: 25.05.2007
(51) Int. Cl.: H04N 5/232, H04N 5/235, G02B 7/36

(54) **Image pickup apparatus and image pickup control method**

(30) Priority: 26.05.2006 JP 2006146569
(71) Applicant: Sony Corporation, Minato-ku Tokyo 108-0075 (JP)
(72) Inventor: Higashino, Fuminobu, Tokyo, 108-0075 (JP)
(74) Representative: Müller - Hoffmann & Partner

(57) **Abstract**

An image pickup apparatus in which contrast signals obtained by moving a focus lens and detecting image data corresponding to an image of a subject captured in a first exposure time are used to achieve focus includes a storage unit storing the contrast signals in correspondence to respective focus lens positions to which the focus lens has been moved; an accumulator accumulating, for each of the focus lens positions, the contrast signals stored in correspondence to the respective focus lens positions; and a controller causing the focus lens to move to a focus lens position at which the maximum value of accumulated contrast signals has been obtained.

## Description

### CROSS REFERENCES TO RELATED APPLICATIONS

The present invention contains subject matter related to Japanese Patent Application JP 2006-146569 filed in the Japanese Patent Office on May 26, 2006, the entire contents of which are incorporated herein by reference.

### BACKGROUND OF THE INVENTION

### 1. Field of the Invention

The present invention relates to image pickup apparatuses and image pickup control methods, and particularly relates to an image pickup apparatus and image pickup control method for achieving correct focus in low light conditions or when a subject is of low contrast.

### 2. Description of the Related Art

When autofocusing is performed with a known technique, contrast signals are detected and obtained while a focus lens is moved. Then, the focus lens is moved to a position at which the maximum contrast has been reached, thereby achieving focus.

For example, there is disclosed a video camera in which, on the basis of changes in evaluation value generated as a focus lens moves and used for determining whether there is contrast, a focus lens position at which the evaluation value has reached the maximum value is identified. If the evaluation value continuously decreases as the focus lens moves further, this maximum value is identified as the maximum evaluation value, that is, the maximum contrast point. Then, a focus lens position corresponding to this maximum evaluation value is determined to be an in-focus position (see, e.g., Japanese Patent No. 3747474).

### SUMMARY OF THE INVENTION

However, even when it is determined that there is no contrast, for example, in low light conditions or when the subject is of low contrast, the focus lens is not moved again to detect and obtain contrast signals. Therefore, it is possible that correct focus is not achieved.

Moreover, since this autofocusing is completed by moving the focus lens to a specific fixed position, it is difficult to determine that correct focus is achieved.

The present invention addresses the circumstances described above. It is desirable to provide a technique for achieving correct focus in low light conditions or when a subject is of low contrast.

According to an embodiment of the present invention, there is provided an image pickup apparatus in which contrast signals obtained by moving a focus lens and detecting image data corresponding to an image of a subject captured in a first exposure time are used to achieve focus. The image pickup apparatus includes a storage unit storing the contrast signals in correspondence to respective focus lens positions to which the focus lens has been moved; an accumulator accumulating, for each of the focus lens positions, the contrast signals stored in correspondence to the respective focus lens positions; and a controller causing the focus lens to move to a focus lens position at which the maximum value of accumulated contrast signals has been obtained.

The image pickup apparatus further includes a first determining unit determining whether a difference between the maximum and minimum values of the accumulated contrast signals exceeds a first threshold value for determining the presence of contrast. If it is determined that the difference is equal to or less than the first threshold value, the controller can control the movement of the focus lens such that a contrast signal for each of the focus lens positions can be obtained again.

The image pickup apparatus further includes a calculator calculating, if it is determined that the difference is equal to or less than the first threshold value, a second exposure time in which it is expected that the difference exceeds the first threshold value. The controller can control the movement of the focus lens such that, for each of the focus lens positions, a contrast signal of the subject captured in the calculated second exposure time can be obtained.

The image pickup apparatus further includes a second determining unit determining whether a time required for obtaining contrast signals of the subject captured in the calculated second exposure time exceeds a predetermined second threshold value. If it is determined that the time required for obtaining the contrast signals exceeds the second threshold value, the calculator can calculate a third exposure time such that the time required for obtaining the contrast signals does not exceed the second threshold value. The controller can control the movement of the focus lens such that, for each of the focus lens positions, a contrast signal of the subject captured in the calculated third exposure time can be obtained.

When the ratio of the third exposure time to the second exposure time is smaller than a predetermined value, the controller can cause the focus lens to move to a predetermined fixed position or to a focus lens position at which the maximum value of the accumulated contrast signals has been obtained.

According to another embodiment of the present invention, there is provided an image pickup control method of an image pickup apparatus in which contrast signals obtained by moving a focus lens and detecting image data corresponding to an image of a subject captured in a first exposure time are used to achieve focus. The image pickup control method includes the steps of storing the contrast signals in correspondence to respective focus lens positions to which the focus lens has been moved; accumulating, for each of the focus lens positions, the contrast signals stored in correspondence to the respective focus lens positions; and causing the focus lens to move to a focus lens position at which the maximum value of accumulated contrast signals has been obtained.

Thus, the contrast signals are stored in correspondence to respective focus lens positions to which the focus lens has been moved, the contrast signals stored in correspondence to the respective focus lens positions are accumulated for each of the focus lens positions, and the focus lens is controlled to move to a focus lens position at which the maximum value of accumulated contrast signals has been obtained.

According to the above-described embodiments of the present invention, autofocusing can be achieved, and also, correct focus can be achieved in low light conditions or when the subject is of low contrast.

### BRIEF DESCRIPTION OF THE DRAWINGS

Figs. 1A and 1B are perspective views illustrating an exemplary external configuration of a digital still camera according to an embodiment of the present invention.
Fig. 2 is a block diagram illustrating an exemplary internal configuration of the digital still camera according to the embodiment of the present invention.
Fig. 3 is a block diagram illustrating an exemplary functional configuration of an autofocus (AF) processor.
Fig. 4 is a flowchart illustrating a procedure of scan AF control.
Fig. 5 is a flowchart illustrating a procedure of scan processing.
Figs. 6A and 6B illustrate exemplary contrast signals generated by scan processing.
Fig. 7 illustrates exemplary accumulated contrast signals.

### DESCRIPTION OF THE PREFERRED EMBODIMENTS

Embodiments of the present invention will now be described. Exemplary correspondences between constituent elements of the present invention and embodiments illustrated in the specification or drawings will be described in the following sections. This is to make sure that embodiments that support the present invention are illustrated in the specification or drawings. Therefore, even if there is an embodiment that is illustrated elsewhere in the specification or drawings but is not illustrated here as that corresponding to a constituent element of the present invention, this does not mean that this embodiment does not correspond to any constituent element of the present invention. At the same time, even if an embodiment is illustrated here as that corresponding to a specific constituent element of the present invention, this does not mean that this embodiment does not correspond to any other constituent elements of the present invention.

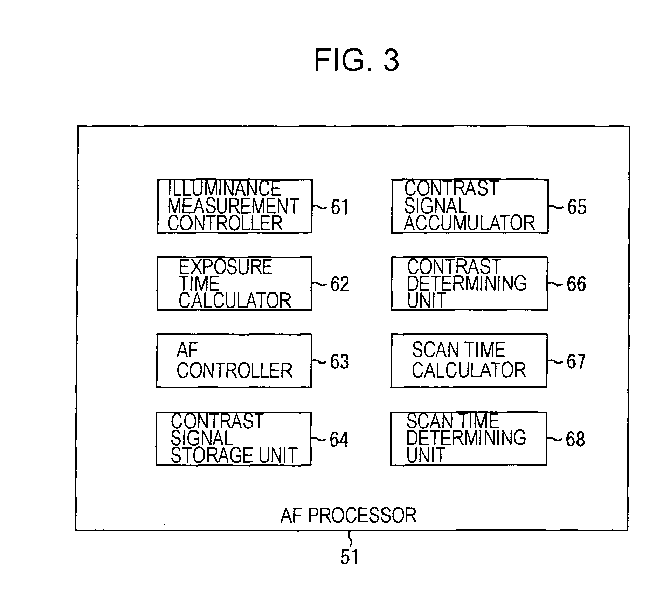

According to an embodiment of the present invention, there is provided an image pickup apparatus in which contrast signals obtained by moving a focus lens and detecting image data corresponding to an image of a subject captured in a first exposure time are used to achieve focus. The image pickup apparatus includes a storage unit (e.g., contrast signal storage unit 64 of Fig. 3) storing the contrast signals in correspondence to respective focus lens positions to which the focus lens has been moved; an accumulator (e.g., contrast signal accumulator 65 of Fig. 3) accumulating, for each of the focus lens positions, the contrast signals stored in correspondence to the respective focus lens positions; and a controller (e.g., AF controller 63 of Fig. 3) causing the focus lens to move to a focus lens position at which the maximum value of accumulated contrast signals has been obtained.

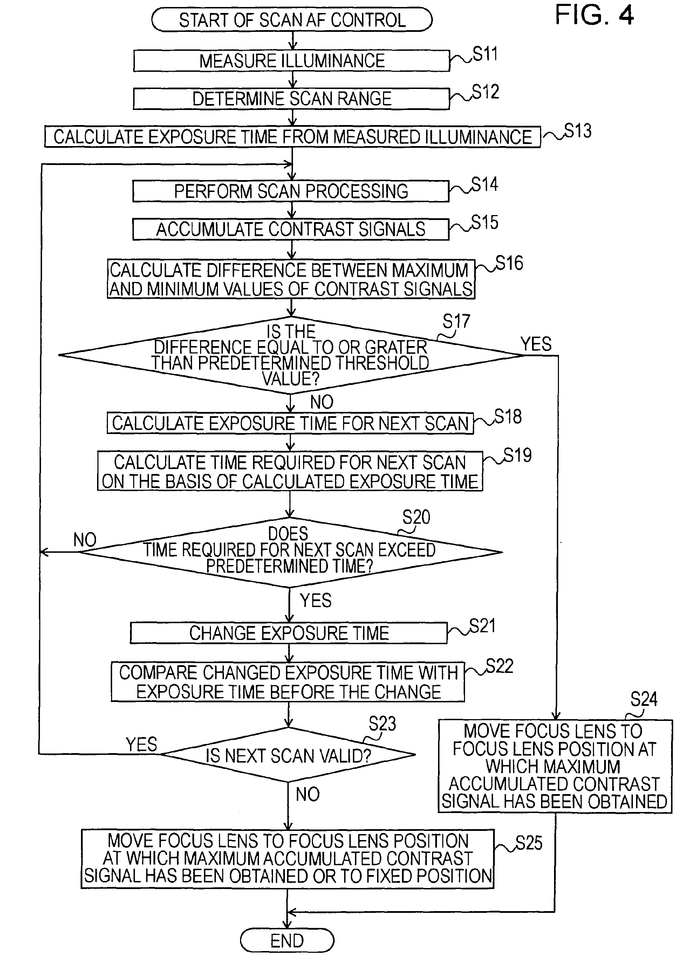

The image pickup apparatus further includes a first determining unit (e.g., contrast determining unit 66 of Fig. 3) determining whether a difference between the maximum and minimum values of the accumulated contrast signals exceeds a first threshold value for determining the presence of contrast. If it is determined that the difference is equal to or less than the first threshold value, the controller can control the movement of the focus lens such that a contrast signal for each of the focus lens positions can be obtained again (e.g., step S14 of Fig. 4).

The image pickup apparatus further includes a calculator (e.g., exposure time calculator 62 of Fig. 3) calculating, if it is determined that the difference is equal to or less than the first threshold value, a second exposure time in which it is expected that the difference exceeds the first threshold value. The controller can control the movement of the focus lens such that, for each of the focus lens positions, a contrast signal of the subject captured in the calculated second exposure time can be obtained (e.g., step S14 of Fig. 4).

The image pickup apparatus further includes a second determining unit (e.g., scan time determining unit 68 of Fig. 3) determining whether a time required for obtaining contrast signals of the subject captured in the calculated second exposure time exceeds a predetermined second threshold value. If it is determined that the time required for obtaining the contrast signals exceeds the second threshold value, the calculator can calculate a third exposure time such that the time required for obtaining the contrast signals does not exceed the second threshold value (e.g., step S21 of Fig. 4). The controller can control the movement of the focus lens such that, for each of the focus lens positions, a contrast signal of the subject captured in the calculated third exposure time can be obtained (e.g., step S14 of Fig. 4).

When the ratio of the third exposure time to the second exposure time is smaller than a predetermined value, the controller can cause the focus lens to move to a predetermined fixed position or to a focus lens position at which the maximum value of the accumulated contrast signals has been obtained (e.g., step S25 of Fig. 4).

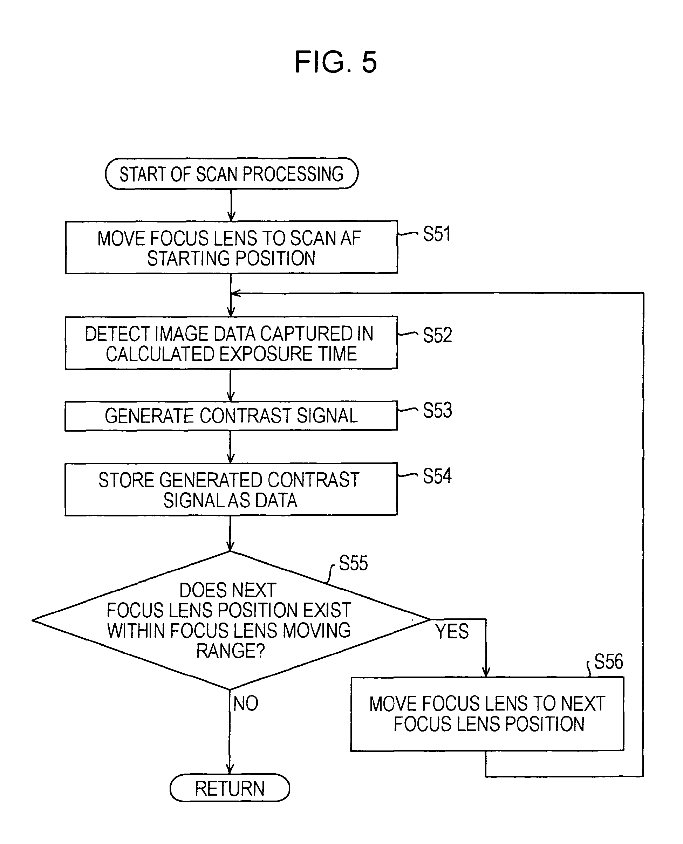

According to another embodiment of the present invention, there is provided an image pickup control method of an image pickup apparatus in which contrast signals obtained by moving a focus lens and detecting image data corresponding to an image of a subject captured in a first exposure time are used to achieve focus. The image pickup control method includes the steps of storing the contrast signals in correspondence to respective focus lens positions to which the focus lens has been moved (e.g., step S54 of Fig. 5); accumulating, for each of the focus lens positions, the contrast signals stored in correspondence to the respective focus lens positions (e.g., step S15 of Fig. 4); and causing the focus lens to move to a focus lens position at which the maximum value of accumulated contrast signals has been obtained (e.g., step S24 of Fig. 4).

Hereinafter, embodiments of the present invention will be described with reference to the drawings.

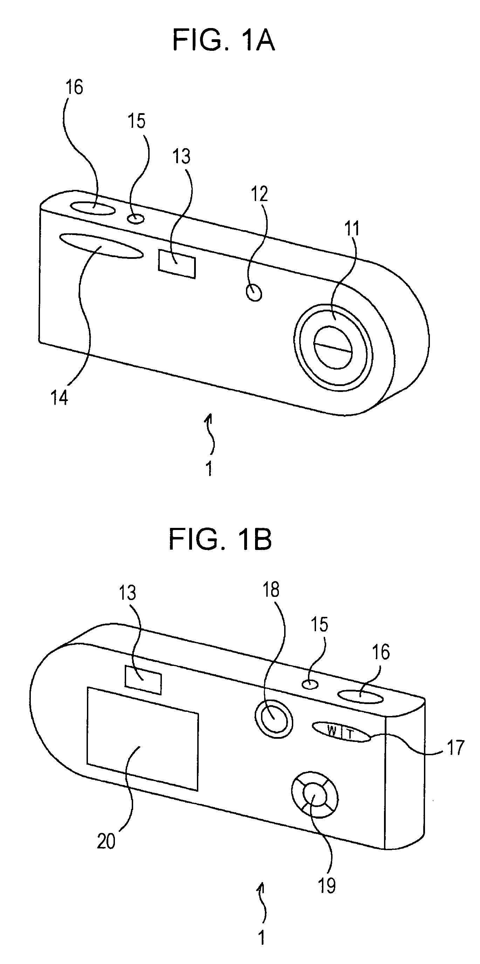

Figs. 1A and 1A are perspective views illustrating an exemplary external configuration of a digital still camera according to an embodiment of the present invention.

Fig. 1A illustrates a front side or a lens side of the digital still camera 1 facing a subject. Fig. 1B illustrates a rear side or a panel side of the digital still camera 1 facing a user.

As illustrated in Fig. 1A, a lens unit 11 is provided on the right of the front side of the digital still camera 1. While not shown, the lens unit 11 includes a lens for converging light from the subject, a focus lens for focus adjustment, an optical system such as an aperture, and others. When the digital still camera 1 is powered on, the lens unit 11 protrudes from a housing of the digital still camera 1. When the digital still camera 1 is powered off, the lens unit 11 retracts into the housing of the digital still camera 1. Fig. 1A illustrates a state in which the lens unit 11 is fitted in the housing of the digital still camera 1.

Referring to Fig. 1A, an autofocus (AF) auxiliary light projector 12 is located to the upper right of the center of the front side of the digital still camera 1. The AF auxiliary light projector 12 emits light serving as AF auxiliary light along an optical axis of the optical system of the lens unit 11, thereby illuminating the subject. This allows an image of the subject to be captured, for example, even in dark places and achieves focus on the subject on the basis of the captured image, that is, enables a so-called autofocus function. If the emission of AF auxiliary light is set to be forcibly turned off, the AF auxiliary light projector 12 does not emit AF auxiliary light even in dark places.

A finder 13 extending to the rear side of the digital still camera 1 is located to the upper left of the center of the front side of the digital still camera 1. A flash 14 is located to the left of the finder 13.

A power switch 15 used to turn the power on and off and a shutter button (or release button) 16 used to record a captured image are provided at the top of the digital still camera 1. The power switch 15 and the shutter button 16 are located on the left as viewed from the front side of the digital still camera 1.

Referring to Fig. 1B, a zoom button 17, a mode dial 18, and an operation button 19 are located on the right of the rear side of the digital still camera 1. The zoom button 17 at the upper right is used to adjust the zoom factor. The mode dial 18 to the left of the zoom button 17 is used to select a mode of the digital still camera 1 from available modes, such as a mode for forcibly enabling or disabling the firing of the AF auxiliary light projector 12 or the flash 14, a mode for allowing the user to use a self-timer, and a mode for displaying a menu on a liquid crystal panel 20. The operation button 19 provided under the zoom button 17 is used, for example, to move a cursor to select an option from the menu displayed on the liquid crystal panel 20 and confirm the selection. The liquid crystal panel 20 is capable of displaying various images.

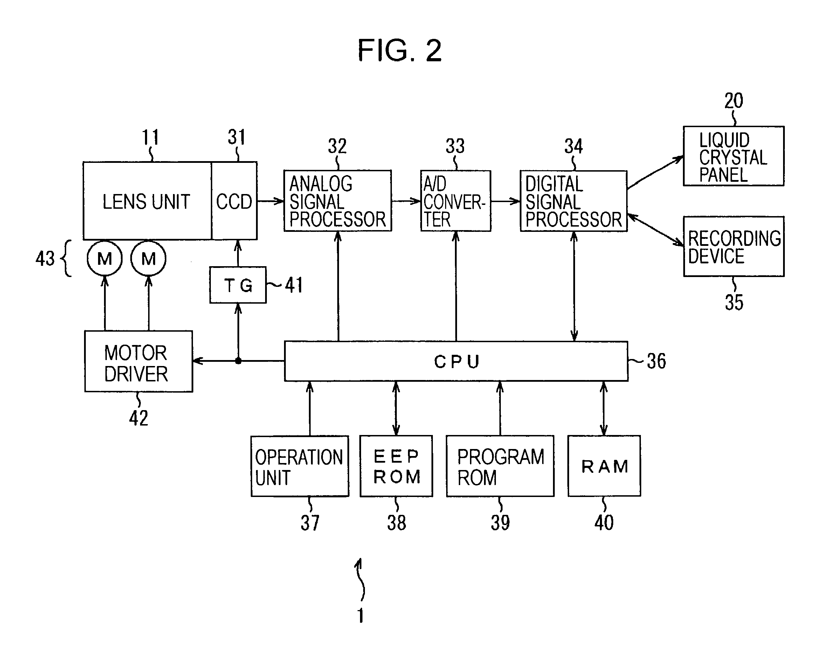

Fig. 2 illustrates an exemplary internal configuration of the digital still camera 1 of Figs. 1A and 1B. The digital still camera 1 includes the lens unit 11, the AF auxiliary light projector 12, the finder 13, the flash 14, the liquid crystal panel 20, a charge-coupled device (CCD) 31, an analog signal processor 32, an analog-to-digital (A/D) converter 33, a digital signal processor 34, a recording device 35, a central processing unit (CPU) 36, an operation unit 37, an electrically erasable programmable read-only memory (EEPROM) 38, a program read-only memory (ROM) 39, a random-access memory (RAM) 40, a timing generator (TG) 41, a motor driver 42, and an actuator (or motors) 43.

The AF auxiliary light projector 12, the finder 13, and the flash 14 illustrated in Fig. 1A are omitted from Fig. 2 for simplicity.

The CCD 31 is a CCD sensor and operates according to a timing signal supplied from the timing generator 41. The CCD 31 receives light from the subject through the lens unit 11, performs photoelectric conversion, and supplies to the analog signal processor 32 an analog image signal as an electric signal corresponding to the amount of the received light. The CCD 31 is not limited to the CCD sensor, but may be any image pickup device (e.g., complementary metal oxide semiconductor (CMOS) sensor) capable of generating image signals on a pixel-by-pixel basis.

The analog signal processor 32 performs, under control of the CPU 36, analog signal processing such as amplification of an analog image signal from the CCD 31 and supplies to the A/D converter 33 an image signal resulting from the analog signal processing.

The A/D converter 33 performs, under control of the CPU 36, A/D conversion on the image signal which is an analog signal received from the analog signal processor 32, and supplies to the digital signal processor 34 image data represented by a digital signal resulting from the A/D conversion.

The digital signal processor 34 performs, under control of the CPU 36, digital signal processing, such as denoising, on the image data from the A/D converter 33, supplies the resulting image data to the liquid crystal panel 20 to be displayed thereon. Also, the digital signal processor 34 compresses the image data from the A/D converter 33 in Joint Photographic Experts Group (JPEG) format or the like and supplies the resulting compressed image data to the recording device 35 to be recorded therein. Additionally, the digital signal processor 34 expands the compressed image data recorded in the recording device 35 and supplies the resulting expanded image data to the liquid crystal panel 20 to be displayed thereon.

The recording device 35 is, for example, a semiconductor memory, such as a disk memory card, or other type of removable recording medium, such as a digital versatile disc (DVD). The recording device 35 can be easily inserted into and removed from the digital still camera 1.

The CPU 36 controls each component of the digital still camera 1 by executing a program recorded in the program ROM 39. Also, the CPU 36 performs various processing operations according to signals from the operation unit 37.

The operation unit 37 is operated by the user and supplies, to the CPU 36, a signal corresponding to the user's operation. The operation unit 37 includes the power switch 15, the shutter button 16, the zoom button 17, the mode dial 18, and the operation button 19 illustrated in Fig. 1B.

The EEPROM 38 stores, under control of the CPU 36, data that needs to be retained after the digital still camera 1 is powered off. Examples of the data stored in the EEPROM 38 include various settings on the digital still camera 1.

The program ROM 39 stores programs to be executed by the CPU 36 and data necessary for the CPU 36 to execute the programs. The RAM 40 temporarily stores programs and data necessary for the CPU 36 to perform various processing operations.

The timing generator 41 supplies a timing signal to the CCD 31 under control of the CPU 36. An exposure time for the CCD 31, that is, a shutter speed and the like are controlled according to the timing signal supplied from the timing generator 41 to the CCD 31.

The motor driver 42 drives the actuator 43 under control of the CPU 36. When the actuator 43 is driven, the lens unit 11 protrudes from or retracts into the housing of the digital still camera 1. Also, when the actuator 43 is driven, the aperture of the lens unit 11 is adjusted or the focus lens of the lens unit 11 is moved.

In the digital still camera 1 configured as described above, the CCD 31 receives light from the subject through the lens unit 11, performs photoelectric conversion, and outputs the resulting analog image signal. The analog image signal output by the CCD 31 is processed by the analog signal processor 32 and the A/D converter 33, converted into image data represented by a digital signal, and supplied to the digital signal processor 34.

The image data supplied from the A/D converter 33 to the digital signal processor 34 is further supplied to the liquid crystal panel 20 and displayed thereon as a so-called through image.

Subsequently, when the user operates the shutter button 16 illustrated in Figs. 1A and 1B, a signal corresponding to this operation is supplied from the operation unit 37 to the CPU 36. When the signal corresponding to the operation performed on the shutter button 16 is supplied from the operation unit 37, the CPU 36 causes the digital signal processor 34 to compress the image data supplied from the A/D converter 33 to the digital signal processor 34, and also causes the digital signal processor 34 to record the resulting compressed image data in the recording device 35.

Typical photographing is carried out in the way described above.

A program to be executed by the CPU 36 is installed or stored in the program ROM 39 in advance, or may be recorded in the recording device 35, provided to the user as a package medium, and stored in the EEPROM 38 from the package medium through the digital signal processor 34 and the CPU 36 to be installed in the digital still camera 1. It is also possible that a program to be executed by the CPU 36 is downloaded from a download site directly to the digital still camera 1 of Fig. 2, or temporarily to a computer (not shown), supplied to the digital still camera 1 of Fig. 2, and stored in the EEPROM 38 to be installed in the digital still camera 1.

The digital still camera 1 of Fig. 2 has an autofocus function and adjusts focus by moving the focus lens on the basis of an image captured by the CCD 31.

More specifically, for example, the digital still camera 1 detects, while moving the focus lens in a predetermined exposure time, a high frequency component of a luminance signal of image data obtained from the digital signal processor 34 at each focus lens position along a path along which the focus lens moves, and thus generates a contrast signal. Then, the digital still camera 1 moves the focus lens to a focus lens position at which the maximum value of contrast signals has been obtained so as to focus on the subject, thereby achieving autofocus.

A contrast signal is data that is obtained, for example, by integrating high frequency components extracted from an image signal of a captured subject image and present in a predetermined area. A larger contrast signal value means a higher contrast of the subject, while a smaller contrast signal value means a lower contrast of the subject. The digital still camera 1 focuses on the subject by moving the focus lens to a focus lens position at which the highest contrast has been obtained, and thereby achieves autofocus.

Hereinafter, generating and obtaining a contrast signal at each focus lens position while moving the focus lens in a predetermined exposure time will be referred to as "scan". Also, achieving autofocus by scan will be referred to as "scan AF".

In the digital still camera 1 of Fig. 2, AF processing relating to the autofocus function is performed when the CPU 36 executes a program.

Fig. 3 is a block diagram illustrating an exemplary functional configuration of an AF processor 51 which performs AF processing. The AF processor 51 is implemented when the CPU 36 executes a program.

The AF processor 51 includes an illuminance measurement controller 61, an exposure time calculator 62, an AF controller 63, a contrast signal storage unit 64, a contrast signal accumulator 65, a contrast determining unit 66, a scan time calculator 67, and a scan time determining unit 68.

The illuminance measurement controller 61 causes an illuminance sensor (not shown) in the digital still camera 1 to measure illuminance at the position of the subject. The illuminance measurement controller 61 obtains the measured illuminance from the illuminance sensor and supplies the obtained illuminance to the exposure time calculator 62. Alternatively, the illuminance measurement controller 61 may detect brightness of subject image data supplied from the contrast signal storage unit 64 and determine illuminance from the detected brightness.

On the basis of the illuminance supplied from the illuminance measurement controller 61, the exposure time calculator 62 calculates an exposure time in which image data for generating contrast signals is obtained. For example, the exposure time is calculated as a predetermined period of time corresponding to an exposure value specified by the user.

For example, if it is determined in the first scan processing that there is no contrast, the exposure time calculator 62 calculates an exposure time in which it is expected to be determined in the second scan processing that there is contrast. More specifically, the exposure time calculator 62 calculates, on the basis of the difference between the maximum and minimum values of accumulated contrast signals (described below) and a predetermined threshold value, an exposure time in which the difference is expected to exceed the predetermined threshold value.

Additionally, for example, if it is determined that the time required for scan to be performed in the above-described exposure time in which it is expected to be determined in the second scan processing that there is contrast exceeds a predetermined time, the exposure time calculator 62 changes the exposure time so as not to exceed the predetermined time.

In other words, the exposure time calculator 62 calculates the most appropriate exposure time for scan processing on the basis of various conditions.

The AF controller 63 determines a scan range that is a focus range in which scan processing is performed. The scan range is a range of distance to the subject to be focused on. The AF controller 63 defines a moving range which corresponds to the scan range and within which the focus lens is moved. On the basis of the exposure time calculated by the exposure time calculator 62, the AF controller 63 controls the CCD 31 through the timing generator 41 and also controls the motor driver 42 such that the focus lens is moved within the defined moving range corresponding to the scan range.

While moving the focus lens, the AF controller 63 obtains, in the calculated exposure time, image data captured by the CCD 31. The AF controller 63 obtains this image data from the digital signal processor 34 of Fig. 2 at each of the focus lens positions along the path along which the focus lens is moved. From the image data obtained from the digital signal processor 34 at each focus lens position, the AF controller 63 extracts and detects a high frequency component of a luminance signal. On the basis of the detected result, the AF controller 63 generates a contrast signal for each focus lens position. In other words, the AF controller 63 obtains image data in the calculated exposure time and controls scan processing.

Moreover, on the basis of the result of the scan processing, the AF controller 63 controls the movement of the focus lens such that the focus lens is moved to a focus lens position at which the maximum value of contrast signals has been obtained and thus the subject is brought into focus. The AF controller 63 controls scan AF in the way described above.

Additionally, for example, if it is determined that the next scan processing is invalid, or more specifically, if the changed exposure time calculated by the exposure time calculator 62 is extremely shorter than the exposure time before being changed and it is difficult to obtain sufficient contrast signals, the AF controller 63 controls the movement of the focus lens such that it is moved to a focus lens position at which the maximum value of accumulated contrast signals has been obtained or to a predetermined fixed position. Here, the fixed position is, for example, a position defined by a distance specified by the user.

The contrast signal storage unit 64 stores, as data, a contrast signal generated by the AF controller 63 for each focus lens position in correspondence to the corresponding focus lens position.

For each focus lens position, the contrast signal accumulator 65 accumulates contrast signals stored in the contrast signal storage unit 64. In other words, for each focus lens position, the contrast signal accumulator 65 adds up contrast signals obtained through scan processing performed a plurality of times.

The contrast determining unit 66 determines whether a difference value obtained from accumulated contrast signals for different focus lens positions exceeds a predetermined threshold value that is used for determining the presence or absence of contrast. Here, the difference value is, for example, a value of difference between the maximum and minimum values of accumulated contrast signals. In other words, the contrast determining unit 66 determines the presence or absence of contrast by determining whether a difference between the maximum and minimum values of accumulated contrast signals exceeds a predetermined threshold value.

The scan time calculator 67 calculates, on the basis of the calculated exposure time, the time required for the focus lens to be moved in its moving range corresponding to the scan range and for contrast signals to be generated for respective focus lens positions. In other words, the scan time calculator 67 calculates a scan time that is the time required for scan processing.

The scan time determining unit 68 determines whether the calculated scan time exceeds a predetermined time. In other words, the scan time determining unit 68 determines whether the time required for scan AF and calculated on the basis of the calculated scan time exceeds a predetermined time limit.

The next section will describe scan AF control performed in the digital still camera 1 in low light conditions or when the subject is of low contrast.

Fig. 4 is a flowchart illustrating exemplary scan AF control performed in the AF processor 51 of the digital still camera 1.

In step S11, the illuminance measurement controller 61 causes the illuminance sensor (not shown) of the digital still camera 1 to measure illuminance at the position of the subject. The illuminance measurement controller 61 obtains the measured illuminance from the illuminance sensor and supplies the obtained illuminance to the exposure time calculator 62.

In step S12, the AF controller 63 determines a scan range that is a focus range in which scan processing is performed. More specifically, for example, if the emission of AF auxiliary light is set to be forcibly turned off in such a dark place where the AF auxiliary light projector 12 emits AF auxiliary light, the AF controller 63 limits the scan range to a distance of, for example, two meters from a close position to a fixed position so as to reduce the scan time. Here, the fixed position may be, for example, a position defined by the reach of AF auxiliary light or by a distance specified arbitrarily.

In step S13, on the basis of the illuminance supplied from the illuminance measurement controller 61, the exposure time calculator 62 calculates an exposure time for obtaining image data for generating contrast signals. For example, the exposure time calculator 62 calculates an exposure time corresponding to an exposure value specified by the user.

In step S14, the AF controller 63 controls scan processing in the calculated exposure time.

A detailed example of scan processing corresponding to step S14 will now be described with reference to the flowchart of Fig. 5.

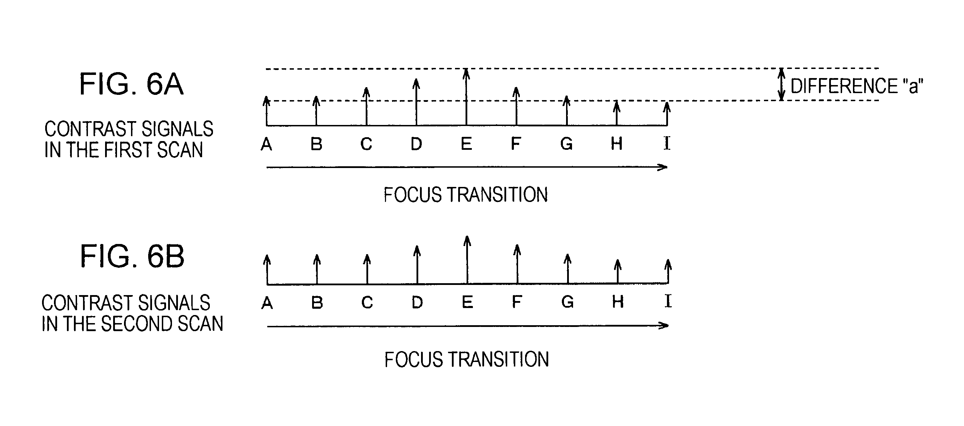

In step S51, the AF controller 63 controls the motor driver 42 such that the focus lens is moved to the starting position for scan AF. For example, as illustrated in Fig. 6A where letters A through I indicate focus lens positions along the path corresponding to the moving range within which the focus lens is moved and which corresponds to the scan range, the AF controller 63 controls the motor driver 42 such that the focus lens is moved to focus lens position A.

More specifically, for example, if the scan range determined in step S12 is up to two meters from a close position, focus lens positions A through I of Fig. 6A are focus lens positions corresponding to respective positions within a range of up to two meters from the close position. That is, the AF controller 63 causes the focus lens to move between focus lens positions A and I such that the subject is captured within a scan range of up to two meters from the close position.

In step S52, the AF controller 63 detects image data captured in the calculated exposure time while causing the focus lens to move. More specifically, while causing the focus lens to move, the AF controller 63 controls the CCD 31 through the timing generator 41 such that the subject is captured near focus lens position A in the exposure time calculated on the basis of the measured illuminance. The AF controller 63 obtains from the digital signal processor 34 image data captured by the CCD 31. On the basis of the obtained image data, the AF controller 63 extracts and detects a high frequency component of a luminance signal of the image data, which is a digital signal.

In step S53, the AF controller 63 generates a contrast signal at focus lens position A from the detected result.

In step S54, the contrast signal storage unit 64 stores, as data, the contrast signal generated at focus lens position A in correspondence to focus lens position A. In Fig. 6A, the length of an arrow at focus lens position A represents the value of the contrast signal at focus lens position A. The contrast signal storage unit 64 stores, for example, this value in correspondence to information indicating focus lens position A.

In step S55, the AF controller 63 determines whether the next focus lens position exists within the moving range in which the focus lens moves and which corresponds to the scan range. If it is determined in step S55 that the next focus lens position exists within the moving range of the focus lens, the process proceeds to step S56.

In step S56, the AF controller 63 controls the motor driver 42 such that the focus lens is moved to the next focus lens position. More specifically, for example, the AF controller 63 controls the motor driver 42 such that the focus lens is moved to focus lens position B of Fig. 6A. After step S56, the process returns to step S52 and the subsequent steps are repeated.

On the other hand, if it is determined in step S55 that the next focus lens position does not exist within the moving range of the focus lens, in other words, when the above-described steps are repeated and processing at focus lens position I of Fig. 6A (i.e., at the end position for scan AF) is completed, the scan processing ends.

In this way, while the focus lens is moved from focus lens positions A to I, the subject is captured near the respective focus lens positions in the calculated exposure time. Thus, in the first scan, a contrast signal for each focus lens position can be obtained as illustrated in Fig. 6A. In the first scan, the maximum contrast signal value is obtained at focus lens position E, and the minimum contrast signal value is obtained at focus lens positions H and I.

Referring back to Fig. 4, in step S15, the contrast signal accumulator 65 adds up, for each focus lens position, contrast signals stored in the contrast signal storage unit 64. The contrast signal accumulator 65 supplies the accumulated contrast signals to the contrast determining unit 66. In step S15 in the first cycle, however, contrast signals obtained at respective focus lens positions in the first scan are simply transmitted from the contrast signal accumulator 65 to the contrast determining unit 66, as contrast signals are not yet accumulated after the first scan.

In step S16, the contrast determining unit 66 calculates the difference between the maximum and minimum values of accumulated contrast signals. In step S16 in the first cycle, however, the difference between the maximum and minimum values of contrast signals obtained in the first scan is calculated, as contrast signals are not yet accumulated after the first scan. More specifically, for example, as illustrated in Fig. 6A, the contrast determining unit 66 calculates difference "a" between the maximum contrast signal at focus lens position E and the minimum contrast signal at focus lens position H or I.

In step S17, the contrast determining unit 66 determines whether the difference between the maximum and minimum values of contrast signals is equal to or greater than a predetermined threshold value. Here, the predetermined threshold value is a value for determining whether the subject has contrast. For example, when the minimum difference between the maximum and minimum contrast signals for determining the presence of contrast is used as a predetermined threshold value, if difference "a" is equal to or greater than the predetermined threshold value, it is determined that the scanned subject has contrast. In other words, the contrast determining unit 66 determines whether the scanned subject has contrast by determining whether difference "a" is equal to or greater than a predetermined threshold value.

If it is determined in step S17 that the difference between the maximum and minimum values of contrast signals is less than a predetermined threshold value, in other words, if it is determined that there is no contrast, the process proceeds to step S18.

In step S18, the exposure time calculator 62 calculates an exposure time for the next scan. For example, on the basis of difference "a" and a predetermined threshold value, the exposure time calculator 62 calculates an exposure time in which difference "b" between the maximum and minimum values of accumulated contrast signals obtained after the second scan processing is expected to be equal to or greater than a predetermined threshold value. In other words, the exposure time calculator 62 calculates an exposure time in which it is expected to be determined that there is contrast.

More specifically, if a threshold value for determining whether there is contrast is set, for example, at "3a", since the difference between the threshold value "3a" and difference "a" obtained in the first scan processing is "2a", the exposure time calculator 62 calculates the exposure time for the second scan such that the difference obtained after the second scan processing is equal to or greater than "2a". That is, the exposure time calculator 62 calculates the exposure time for the second scan such that it is double or longer than double the exposure time for the first scan processing.

In step S19, on the basis of the calculated exposure time, the scan time calculator 67 calculates the time required for the next scan.

In step S20, the scan time determining unit 68 determines whether the calculated scan time exceeds a predetermined time. In other words, the scan time determining unit 68 determines whether the time required for scan AF and calculated on the basis of the calculated scan time exceeds a predetermined time limit.

If it is determined in step S20 that the calculated scan time exceeds the predetermined time, that is, the time required for scan AF exceeds the predetermined time limit, the process proceeds to step S21.

On the other hand, if it is determined in step S20 that the calculated scan time does not exceed the predetermined time, that is, the time required for scan AF does not exceed the predetermined time limit, the process returns to step S14 and the subsequent steps are performed.

In step S21, the exposure time calculator 62 changes the exposure time such that the scan time does not exceed the predetermined time. More specifically, for example, the exposure time calculator 62 determines the exposure time by performing inverse calculation from the predetermined time limit such that the time required for scan AF does not exceed the predetermined time limit.

In step S22, the exposure time calculator 62 compares the changed exposure time with the exposure time before the change (i.e., with the exposure time calculated in step S18).

In step S23, on the basis of the comparison performed in step S22, the AF controller 63 determines whether the next scan is valid.

For example, the AF controller 63 determines whether the ratio of the changed exposure time to the exposure time before the change is equal to or greater than a predetermined value. More specifically, if the predetermined value is 50% or 0.5, the AF controller 63 determines whether the changed exposure time is equal to or longer than half the exposure time before the change. If the changed exposure time is extremely shorter than the exposure time before the change, the values of contrast signals obtained, for example, in the second scan processing are small. In this case, a value obtained as a difference between the maximum and minimum values of accumulated contrast signals is not sufficient and thus, the second scan processing is determined to be invalid. That is, on the basis of the result of comparison between the changed exposure time and the exposure time before the change, the AF controller 63 determines whether the next scan is valid. Thus, the digital still camera 1 does not have to perform unnecessary scan processing.

If it is determined in step S23 that the ratio of the changed exposure time to the exposure time before the change is equal to or greater than a predetermined value, that is, if it is determined that the next scan is valid, the process returns to step S14 and the subsequent steps are performed.

In step S14 in the second cycle, the AF controller 63 controls scan processing in the exposure time calculated in step S18 or in the changed exposure time obtained in step S21. In the second scan processing, contrast signals for respective focus lens positions, such as those illustrated in Fig. 6B, can be obtained. If there is no significant change either in subject or environment where the subject is captured, contrast signals that are substantially the same as those obtained in the first scan processing are obtained in the second scan processing.

In step S15 in the second cycle, the contrast signal accumulator 65 accumulates, for each focus lens position, contrast signals stored in the contrast signal storage unit 64. More specifically, the contrast signal accumulator 65 adds up, for each of focus lens positions A through I, contrast signals obtained in the first and second scan processing and stored in the contrast signal storage unit 64.

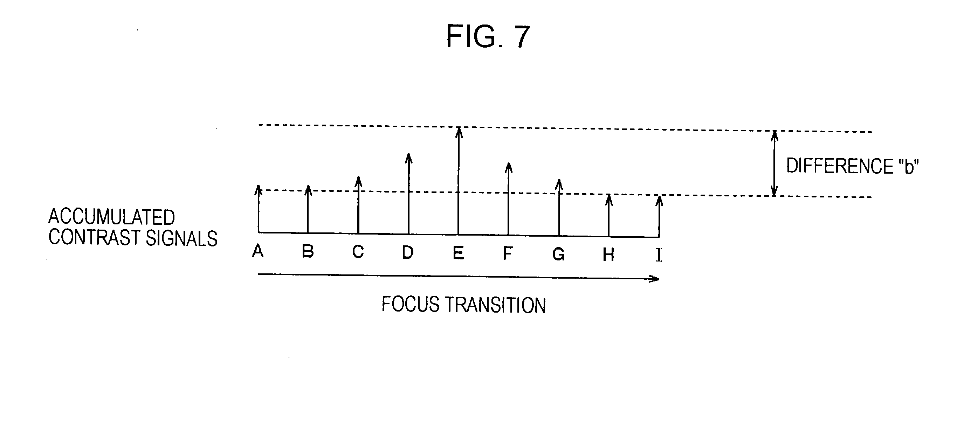

Thus, accumulated contrast signals as illustrated in Fig. 7 can be obtained.

In step S16 in the second cycle, the contrast determining unit 66 calculates the difference between the maximum and minimum values of accumulated contrast signals. More specifically, as illustrated in Fig. 7, the contrast determining unit 66 calculates difference "b" between the maximum contrast signal at focus lens position E and the minimum contrast signal at focus lens position H or I. If, for example, contrast signals obtained in the second scan processing are substantially the same as those obtained in the first scan processing, difference "b" is substantially equal to "2a" which is double the value of difference "a" obtained in the first scan processing.

In step S17 in the second cycle, the contrast determining unit 66 determines whether the difference between the maximum and minimum values of accumulated contrast signals is equal to or greater than a predetermined threshold value. More specifically, for example, the contrast determining unit 66 determines whether the scanned subject has contrast by determining whether difference "b" is equal to or greater than a predetermined threshold value.

If it is determined in step S17 in the second cycle that difference "b" between the maximum and minimum values of accumulated contrast signals is less then a predetermined threshold value, that is, if it is determined that there is no contrast, the process proceeds to step S18 and the subsequent steps are repeated.

On the other hand, if it is determined in step S17 that the difference between the maximum and minimum values of accumulated contrast signals, that is, difference "a" obtained in the first scan processing, difference "b" resulting from the second scan processing and accumulation of contrast signals, or a difference resulting from the third or subsequent scan processing and accumulation of contrast signals is equal to or greater than a predetermined threshold value, in other words, if it is determined that there is contrast, the process proceeds to step S24.

Thus, as long as a time limit is not exceeded, scan processing and accumulation of contrast signals are repeated until it is determined that there is contrast.

In step S24, the AF controller 63 performs control such that the focus lens is moved to a focus lens position at which the maximum value of accumulated contrast signals has been obtained, and then the process ends. For example, the AF controller 63 performs control such that the focus lens is moved to focus lens position E at which the maximum contrast signal (illustrated in Fig. 7) has been obtained through the second scan processing and accumulation of contrast signals.

On the other hand, if it is determined in step S23 that the changed exposure time is extremely shorter than the exposure time before the change, and that the ratio of the changed exposure time to the exposure time before the change is smaller then the predetermined value, that is, if it is determined that the next scan is not valid, the process proceeds to step S25.

In step S25, the AF controller 63 performs control such that the focus lens is moved to a focus lens position at which the maximum value of accumulated contrast signals has been obtained or to a predetermined fixed position, and then the process ends. For example, if it is determined in step S23 in the first cycle that the next scan or the second scan is not valid, the AF controller 63 performs control such that the focus lens is moved to focus lens position E at which the maximum contrast signal has been obtained in the first scan processing (illustrated in Fig. 6A) or to a focus lens position corresponding to a fixed position at a distance of, for example, two meters from a close position. Here, the fixed position may be located at infinity or specified arbitrarily.

As described above, in low light conditions or when the subject is of low contrast, the digital still camera 1 adds up contrast signals multiple times and can move the focus lens to a focus lens position at which the maximum contrast signal has been obtained.

Thus, it is made possible to increase the probability of achieving focus in low light conditions or when the subject is of low contrast. At the same time, high-speed autofocusing can be achieved by calculating the exposure time required for the second and subsequent scan processing and reducing the time required for achieving focus.

In the present embodiment, AF processing is performed by having the CPU 36 execute a program. However, AF processing may be performed by dedicated hardware.

The processing steps of describing the program for having the CPU 36 perform various types of processing do not necessarily have to be processed in time sequence in the order shown in the flowchart, but include processing executed in parallel or individually, such as parallel processing or object-oriented processing.

Also, the program may be processed by a single CPU or may be subjected to distributed processing by a plurality of CPUs.

Autofocusing can be achieved when the movement of the focus lens is controlled in the manner described above. Also, when the movement of the focus lens is controlled such that a contrast signal is stored in correspondence to the corresponding focus lens position to which the focus lens has been moved, contrast signals stored in correspondence to respective focus lens positions are accumulated for each focus lens position, and the focus lens is moved to a focus lens position at which the maximum value of the accumulated contrast signals has been obtained, correct focus can be achieved in low light conditions or when the subject is of low contrast.

The present invention is applicable not only to digital still cameras, but also to other apparatuses, such as digital video cameras, that are capable of capturing subjects.

Embodiments of the present invention are not limited to those described above, but may be modified variously without departing from the scope of the invention.

## Claims

1. An image pickup apparatus in which contrast signals obtained by moving a focus lens and detecting image data corresponding to an image of a subject captured in a first exposure time are used to achieve focus, the image pickup apparatus comprising:
storage means for storing the contrast signals in correspondence to respective focus lens positions to which the focus lens has been moved;
accumulating means for accumulating, for each of the focus lens positions, the contrast signals stored in correspondence to the respective focus lens positions; and
control means for causing the focus lens to move to a focus lens position at which the maximum value of accumulated contrast signals has been obtained.

2. The image pickup apparatus according to Claim 1, further comprising:
first determining means for determining whether a difference between the maximum and minimum values of the accumulated contrast signals exceeds a first threshold value for determining the presence of contrast,
wherein the control means controls, if it is determined that the difference is equal to or less than the first threshold value, the movement of the focus lens such that a contrast signal for each of the focus lens positions can be obtained again.

3. The image pickup apparatus according to Claim 2, further comprising:
calculating means for calculating, if it is determined that the difference is equal to or less than the first threshold value, a second exposure time in which it is expected that the difference exceeds the first threshold value,
wherein the control means controls the movement of the focus lens such that, for each of the focus lens positions, a contrast signal of the subject captured in the calculated second exposure time can be obtained.

4. The image pickup apparatus according to Claim 3, further comprising:
second determining means for determining whether a time required for obtaining contrast signals of the subject captured in the calculated second exposure time exceeds a predetermined second threshold value,
wherein the calculating means calculates, if it is determined that the time required for obtaining the contrast signals exceeds the second threshold value, a third exposure time such that the time required for obtaining the contrast signals does not exceed the second threshold value; and
the control means controls the movement of the focus lens such that, for each of the focus lens positions, a contrast signal of the subject captured in the calculated third exposure time can be obtained.

5. The image pickup apparatus according to Claim 4,
wherein the control means causes, when the ratio of the third exposure time to the second exposure time is smaller than a predetermined value, the focus lens to move to a predetermined fixed position or to a focus lens position at which the maximum value of the accumulated contrast signals has been obtained.

6. An image pickup control method of an image pickup apparatus in which contrast signals obtained by moving a focus lens and detecting image data corresponding to an image of a subject captured in a first exposure time are used to achieve focus, the image pickup control method comprising the steps of:
storing the contrast signals in correspondence to respective focus lens positions to which the focus lens has been moved;
accumulating, for each of the focus lens positions, the contrast signals stored in correspondence to the respective focus lens positions; and
causing the focus lens to move to a focus lens position at which the maximum value of accumulated contrast signals has been obtained.

7. An image pickup apparatus in which contrast signals obtained by moving a focus lens and detecting image data corresponding to an image of a subject captured in a first exposure time are used to achieve focus, the image pickup apparatus comprising:
a storage unit storing the contrast signals in correspondence to respective focus lens positions to which the focus lens has been moved;
an accumulator accumulating, for each of the focus lens positions, the contrast signals stored in correspondence to the respective focus lens positions; and
a controller causing the focus lens to move to a focus lens position at which the maximum value of accumulated contrast signals has been obtained.

8. The image pickup apparatus according to Claim 7, further comprising:
a first determining unit determining whether a difference between the maximum and minimum values of the accumulated contrast signals exceeds a first threshold value for determining the presence of contrast,
wherein the controller controls, if it is determined that the difference is equal to or less than the first threshold value, the movement of the focus lens such that a contrast signal for each of the focus lens positions can be obtained again.

9. The image pickup apparatus according to Claim 8, further comprising:
a calculator calculating, if it is determined that the difference is equal to or less than the first threshold value, a second exposure time in which it is expected that the difference exceeds the first threshold value,
wherein the controller controls the movement of the focus lens such that, for each of the focus lens positions, a contrast signal of the subject captured in the calculated second exposure time can be obtained.

10. The image pickup apparatus according to Claim 9, further comprising:
a second determining unit determining whether a time required for obtaining contrast signals of the subject captured in the calculated second exposure time exceeds a predetermined second threshold value,
wherein the calculator calculates, if it is determined that the time required for obtaining the contrast signals exceeds the second threshold value, a third exposure time such that the time required for obtaining the contrast signals does not exceed the second threshold value; and
the controller controls the movement of the focus lens such that, for each of the focus lens positions, a contrast signal of the subject captured in the calculated third exposure time can be obtained.

11. The image pickup apparatus according to Claim 10,
wherein the controller causes, when the ratio of the third exposure time to the second exposure time is smaller than a predetermined value, the focus lens to move to a predetermined fixed position or to a focus lens position at which the maximum value of the accumulated contrast signals has been obtained.
